# EUROPEAN PATENT APPLICATION

(11) **EP 4 539 499 A1**
(43) Date of publication of application: **16.04.2025**
(21) Application number: 23826362.8
(22) Date of filing: 19.06.2023
(51) Int. Cl.: H04R 1/10, H04R 5/033

(54) **STATE DETERMINATION METHOD AND APPARATUS, ELECTRONIC DEVICE, AND READABLE STORAGE MEDIUM**

(30) Priority: 24.06.2022 CN 202210727033
(71) Applicant: Vivo Mobile Communication Co., Ltd., Dongguan, Guangdong 523863 (CN)
(72) Inventor: ZHOU, Kai, Dongguan, Guangdong 523863 (CN); XIA, Xu, Dongguan, Guangdong 523863 (CN)
(74) Representative: Murgitroyd & Company
(86) International application number: PCT/CN2023/101141
(87) International publication number: WO 2023/246714

(57) **Abstract**

This application discloses a state determining method and apparatus, an electronic device, and a readable storage medium, and pertains to the field of electronic technologies. The state determining method is applied to an earphone. The earphone includes N first detection regions and M second detection regions. The method includes: obtaining N first detection values corresponding to the N first detection regions and M second detection values corresponding to the M second detection regions; in a case that at least one of the N first detection values is greater than or equal to a first preset value, determining that the earphone is in a non-wearing state; and in a case that the N first detection values are less than the first preset value and the M second detection values meet a first preset condition, determining that the earphone is in a non-wearing state. In a wearing state of the earphone, the N first detection regions have a distance from the skin, and the M second detection regions are in contact with the skin.

## Description

### CROSS-REFERENCE TO RELATED APPLICATIONS

This application claims priority to Chinese Patent Application No. 202210727033.0, filed with the China National Intellectual Property Administration on June 24, 2022 and entitled "STATE DETERMINING METHOD AND APPARATUS, ELECTRONIC DEVICE, AND READABLE STORAGE MEDIUM", which is incorporated herein by reference in its entirety.

### TECHNICAL FIELD

This application pertains to the field of electronic technologies, and specifically, relates to a state determining method and apparatus, an electronic device, and a readable storage medium.

### BACKGROUND

The application and popularity of TWS (True Wireless Stereo, true wireless stereo) earphones have freed users from the constraints of "wires". To enhance the usability and interaction stability of TWS earphones, most TWS earphones are equipped with a wear detection module. When a TWS earphone is in use, a wear detection module thereof detects a usage status of the TWS earphone so as to control the TWS earphone to perform various tasks.

However, current earphone state detection schemes have low accuracy in the detection result of the usage status of earphones. In a case that a user holds an earphone or puts the earphone on a table or in a pocket, a distance sensing sensor (such as a wear sensor or infrared sensor) on the earphone may be mistakenly triggered, causing the earphone to be mistakenly activated. This not only reduces the operation reliability of earphones but also results in unnecessary energy consumption.

### SUMMARY

Embodiments of this application are intended to provide a state determining method and apparatus, an electronic device, and a readable storage medium, which can solve the problem that low accuracy of the detection result of the state of earphones in the prior art reduces the operation reliability of earphones and results in unnecessary energy consumption.

According to a first aspect, an embodiment of this application provides a state determining method, applied to an earphone. The earphone includes N first detection regions and M second detection regions. The state determining method includes: obtaining N first detection values corresponding to the N first detection regions and M second detection values corresponding to the M second detection regions; in a case that at least one of the N first detection values is greater than or equal to a first preset value, determining that the earphone is in a non-wearing state; and in a case that the N first detection values are less than the first preset value and the M second detection values meet a first preset condition, determining that the earphone is in a non-wearing state. In a wearing state of the earphone, the N first detection regions have a distance from the skin, and the M second detection regions are in contact with the skin.

According to a second aspect, an embodiment of this application provides a state determining apparatus, applied to an earphone. The earphone includes N first detection regions and M second detection regions. The state determining apparatus includes: an obtaining unit configured to obtain N first detection values corresponding to the N first detection regions and M second detection values corresponding to the M second detection regions; and a processing unit configured to: in a case that at least one of the N first detection values is greater than or equal to a first preset value, determine that the earphone is in a non-wearing state. The processing unit is further configured to: in a case that the N first detection values are less than the first preset value and the M second detection values meet a first preset condition, determine that the earphone is in a non-wearing state. In a wearing state of the earphone, the N first detection regions have a distance from the skin, and the M second detection regions are in contact with the skin.

According to a third aspect, an embodiment of this application provides an electronic device. The electronic device includes a processor and a memory, where the memory stores a program or instruction capable of running on the processor, and when the program or instruction is executed by the processor, the steps of the state determining method according to the first aspect are implemented.

According to a fourth aspect, an embodiment of this application provides a readable storage medium, where the readable storage medium stores a program or instruction, and when the program or instruction is executed by a processor, the steps of the state determining method according to the first aspect are implemented.

According to a fifth aspect, an embodiment of this application provides a chip, where the chip includes a processor and a communication interface, the communication interface is coupled to the processor, and the processor is configured to run a program or instruction so as to implement the steps of the state determining method according to the first aspect.

According to a sixth aspect, an embodiment of this application provides a computer program product, where the program product is stored in a storage medium, and the program product is executed by at least one processor so as to implement the steps of the state determining method according to the first aspect.

In the embodiments of this application, in determining the state of the earphone, the N first detection values corresponding to the N first detection regions and the M second detection values corresponding to the M second detection regions of the earphone are obtained. Further, in a case that at least one of the N first detection values is greater than or equal to the first preset value, it is determined that the earphone is in a non-wearing state. In a case that the N first detection values are less than the first preset value and the M second detection values meet the first preset condition, it is determined that the earphone is in a non-wearing state. In a wearing state of the earphone, the N first detection regions of the earphone have a distance from the skin, and the M second detection regions of the earphone are in contact with the skin.

With the above state determining method, based on the contact condition between the ear skin and the earphone in a normal wearing state, the earphone is divided into the N first detection regions that have a distance from the ear skin and the M second detection regions that are in contact with the ear skin. On this basis, in determining the state of the earphone, the detection values corresponding to the detection regions of the earphone are obtained. Further, in a case that any one of the first detection values is greater than or equal to the first preset value, or in a case that each of the first detection values is less than the first preset value and the M second detection values meet the first preset condition, it is determined that the earphone is in a non-wearing state.

In this way, whether the earphone is in a non-wearing state is determined with reference to the first detection values of the first detection regions that are not in contact with the ear skin when the earphone is worn and the second detection values of the second detection regions that can be in contact with the ear skin when the earphone is worn, thereby improving the accuracy of determining the state of the earphone. Therefore, this prevents the earphone from being mistakenly triggered in a case that the earphone is in a non-wearing state, for example, a user holds the earphone or puts the earphone on a table or in a pocket, thus improving the operation reliability of the earphone and reducing energy consumption of the earphone.

### BRIEF DESCRIPTION OF DRAWINGS

FIG. 1 is a schematic flowchart of a state determining method according to an embodiment of this application;
FIG. 2 is a first schematic structural diagram of an earphone according to an embodiment of this application;
FIG. 3 is a second schematic structural diagram of an earphone according to an embodiment of this application;
FIG. 4 is a third schematic structural diagram of an earphone according to an embodiment of this application;
FIG. 5 is a structural block diagram of a state determining apparatus according to an embodiment of this application;
FIG. 6 is a first schematic diagram of hardware of an electronic device according to an embodiment of this application; and
FIG. 7 is a second schematic diagram of hardware of an electronic device according to an embodiment of this application.

### DESCRIPTION OF EMBODIMENTS

The following clearly describes the technical solutions in embodiments of this application with reference to the accompanying drawings in the embodiments of this application. Apparently, the described embodiments are some but not all embodiments of this application. All other embodiments obtained by persons of ordinary skill in the art based on the embodiments of this application fall within the protection scope of this application.

The terms "first", "second", and the like in the specification and claims of this application are used to distinguish between similar objects rather than to describe a specific order or sequence. It should be understood that data used in this way are interchangeable in appropriate circumstances such that the embodiments of this application can be implemented in an order other than those illustrated or described herein. In addition, "first" and "second" are typically used to distinguish between objects of a same type but do not limit quantities of the objects. For example, there may be one or more first objects. In addition, in this specification and claims, "and/or" represents at least one of connected objects, and the character "/" generally represents an "or" relationship between associated objects.

An embodiment of a first aspect of this application provides a state determining method. The technical solution of the state determining method provided in this embodiment of this application can be executed by a state determining apparatus, which can be specifically determined depending on actual use needs. This is not limited in the embodiments of this application. To more clearly describe the state determining method provided in the embodiments of this application, the state determining method being executed by a state determining apparatus is used as an example for description in the following method embodiments.

The following describes in detail the state determining method provided in this embodiment of the first aspect of this application by using specific embodiments and application scenarios thereof with reference to the accompanying drawings.

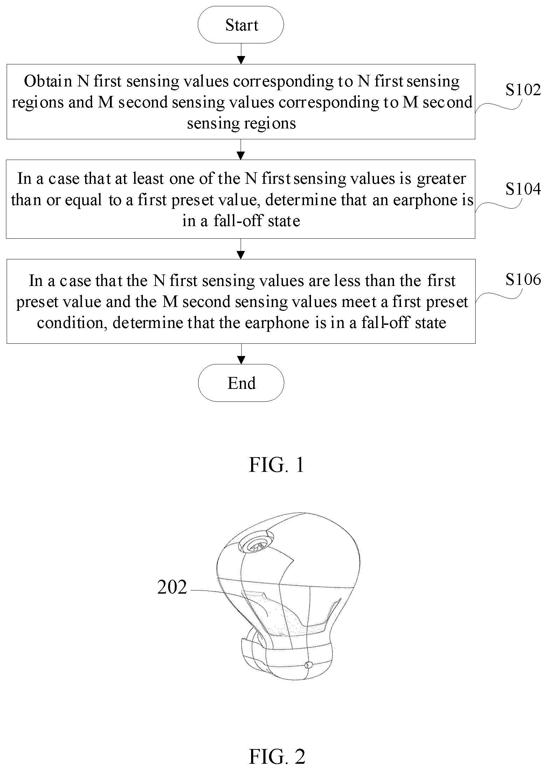

As shown in FIG. 1, an embodiment of this application provides a state determining method, applied to an earphone. The earphone includes N first detection regions and M second detection regions. The method may include the following steps S102 to S 106.

S102: Obtain N first detection values corresponding to the N first detection regions and M second detection values corresponding to the M second detection regions.

The earphone is divided into multiple detection regions based on a contact condition between an ear and the earphone in a normal wearing state. It can be understood that detecting the state of the earphone by regions can avoid misjudgment to some extent, thereby improving the accuracy of the detection result of the state of the earphone.

Specifically, the earphone is divided into the N first detection regions and the M second detection regions based on the contact condition between the ear and the earphone in a normal wearing state. In a wearing state of the earphone, the N first detection regions have a distance from ear skin, and the M second detection regions are in contact with the ear skin.

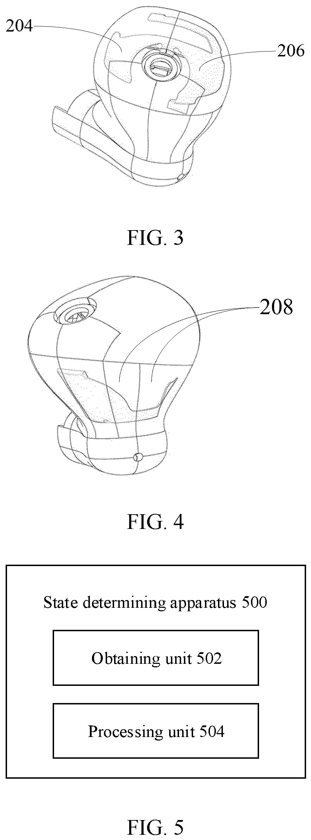

For example, as shown in FIGs. 2 and 3, based on the contact condition between the ear and the earphone in a normal wearing state, the earphone includes a first region 202, a second region 204, and a third region 206. In a wearing state of the earphone, both the second region 204 and the third region 206 are in contact with the ear skin, and the first region 202 has a distance from the ear skin, that is, the first region 202 is not in contact with the ear skin.

Further, N and M are both positive integers greater than or equal to 1. That is, in the state determining method proposed in this embodiment of this application, the usage status of the earphone is determined based on region detection values of at least one first detection region that is not in contact with the ear skin and at least one second detection region that is in contact with the ear skin.

In actual application, since contact conditions between different types of earphones and ear skins of persons vary, and contact conditions between different parts of the same type of earphone and ear skin also vary, a user can flexibly choose how to set or divide multiple detection regions of an earphone depending on an actual situation. This is not specifically limited herein.

Further, the N first detection values correspond one-to-one with the N first detection regions, and each first detection value is used to indicate a deviation between an actual position of the first detection region corresponding to the first detection value of the earphone and a standard position of the first detection region in the normal wearing state of the earphone. Specifically, the first detection value can be represented as a distance value between the first detection region corresponding to the first detection value and the ear skin. The first detection value can alternatively be represented as a skin capacitance value detected for the first detection region corresponding to the first detection value. When the first detection value is large, it indicates that there is a large deviation between the actual position of the first detection region corresponding to the first detection value and the standard position of the first detection region in the normal wearing state of the earphone. When the first detection value is small or even zero, it indicates that there is a small deviation or even no deviation between the actual position of the first detection region corresponding to the first detection value and the standard position of the first detection region in the normal wearing state of the earphone.

Further, the M second detection values correspond one-to-one with the M second detection regions, and each second detection value is used to indicate a deviation between an actual position of the second detection region corresponding to the second detection value of the earphone and a standard position of the second detection region in the normal wearing state of the earphone. Depending on the specific representation form of the second detection value, a correspondence between the magnitude of the second detection value and the deviation between the actual position and the standard position of the second detection region represented by the second detection value also varies.

For example, when the second detection value is represented as a skin capacitance value detected for the second detection region corresponding to the second detection value, a large second detection value indicates that there is a small deviation or even no deviation between the actual position of the second detection region corresponding to the second detection value and the standard position of the second detection region in the normal wearing state of the earphone. When the second detection value is small or even zero, it indicates that there is a large deviation between the actual position of the second detection region corresponding to the second detection value and the standard position of the second detection region in the normal wearing state of the earphone. When the second detection value is represented as a distance value between the second detection region corresponding to the second detection value and the ear skin, a large second detection value indicates that there is a large deviation between the actual position of the second detection region corresponding to the second detection value and the standard position of the first detection region in the normal wearing state of the earphone. When the second detection value is small or even zero, it indicates that there is a small deviation or even no deviation between the actual position of the second detection region corresponding to the second detection value and the standard position of the second detection region in the normal wearing state of the earphone.

In actual application, based on the specific representation form of the second detection value, a user can flexibly set the correspondence between the contact status of the second detection region represented by the second detection value and the ear skin. This is not specifically limited herein.

Additionally, in actual application, the first detection values and the second detection values can be obtained through detection apparatuses corresponding to the detection regions and set in the earphone, for example, sensors, or can be obtained by detecting current values, voltage values, or the like of the detection regions of the earphone. The user can choose the method of obtaining the first detection values and the second detection values depending on an actual situation. This is not specifically limited herein.

S104: In a case that at least one of the N first detection values is greater than or equal to a first preset value, determine that the earphone is in a non-wearing state.

The first detection value is used to indicate a deviation between an actual position of the first detection region corresponding to the first detection value of the earphone and a standard position of the first detection region in the normal wearing state of the earphone. Specifically, when the first detection value is large, it indicates that there is a large deviation between the actual position of the first detection region corresponding to the first detection value and the standard position of the first detection region. When the first detection value is small or even zero, it indicates that there is a small deviation or even no deviation between the actual position of the first detection region corresponding to the first detection value and the standard position of the first detection region.

Further, the first preset value is a value pre-stored in a storage apparatus of the earphone and can be used as a basis for determining the magnitude of the first detection value, that is, a criterion for determining whether the actual position of the first detection region of the earphone is in a normal earphone wearing condition. Specifically, when the first detection value is greater than or equal to the first preset value, it indicates that the first detection value is large, that is, there is a large deviation between the actual position of the first detection region corresponding to the first detection value and the standard position of the first detection region, indicating that the actual position of the first detection region is not in a normal earphone wearing condition. When the first detection value is less than the first preset value, it indicates that the first detection value is small, that is, there is a small deviation between the actual position of the first detection region corresponding to the first detection value and the standard position of the first detection region, indicating that the actual position of the first detection region is in a normal earphone wearing condition.

It can be understood that in the normal wearing state of the earphone, none of the N first detection regions in the earphone is in contact with the human skin, and the N first detection regions all are located at positions relatively close to the ear skin. Therefore, once one of the N first detection regions is detected to be in contact with human skin or has a large distance from the ear skin, it can be directly determined that the earphone is in a non-wearing state.

Specifically, in determining the state of the earphone, the N first detection values detected for the N first detection regions of the earphone can all be obtained. Then, the N first detection values obtained are compared with the first preset value pre-stored in a storage apparatus of the earphone. Once it is detected that the magnitude of one of the N first detection values is greater than or equal to the first preset value, it is determined that the earphone is in a non-wearing state.

Additionally, it should be noted that the first preset value can be obtained by repeatedly testing earphones before factory delivery of earphones. Technicians can alternatively set the specific magnitude of the first preset value depending on an actual application situation. This is not specifically limited herein.

S106: In a case that the N first detection values are less than the first preset value and the M second detection values meet a first preset condition, determine that the earphone is in a non-wearing state.

The first detection value is used to indicate a deviation between an actual position of the first detection region corresponding to the first detection value of the earphone and a standard position of the first detection region in the normal wearing state of the earphone. The first preset value is used as a basis for determining the magnitude of the first detection value, that is, a criterion for determining whether the actual position of the first detection region of the earphone is in a normal earphone wearing condition.

Specifically, when the first detection value is greater than or equal to the first preset value, it indicates that the first detection value is large, that is, the actual position of the first detection region is not in a normal earphone wearing condition. When the first detection value is less than the first preset value, it indicates that the first detection value is small, that is, the actual position of the first detection region is in a normal earphone wearing condition.

Further, the second detection value is used to indicate a deviation between an actual position of the second detection region corresponding to the second detection value of the earphone and a standard position of the second detection region in the normal wearing state of the earphone. The first preset condition is used to indicate the magnitude conditions of the M second detection values when there is a large deviation between the actual positions of the M second detection regions of the earphone and the standard positions of the M second detection regions.

It can be understood that when the N first detection values corresponding to the N first detection regions of the earphone are all less than the first preset value, it indicates that the actual positions of the N first detection regions of the earphone all are in a normal earphone wearing condition. However, in a case that the first detection value is represented as a skin capacitance value detected for the first detection region corresponding to the first detection value, if the earphone is put on a table or in a pocket, although skin capacitance values detected for the N first detection regions, that is, the first detection values, are also small, the earphone is in a non-wearing state. Therefore, when it is detected that the N first detection values are all less than the first preset value, the state of the earphone cannot be directly determined. It needs to further determine the actual state of the earphone with reference to the specific magnitudes of the M second detection values detected for the M second detection regions of the earphone.

Specifically, in determining the state of the earphone, the N first detection values detected for the N first detection regions of the earphone, and the M second detection values detected for the M second detection regions of the earphone can be obtained respectively. Then, the N first detection values obtained are compared with the first preset value pre-stored in the storage apparatus of the earphone. The specific magnitudes of the obtained M second detection values are analyzed and processed. In a case that the magnitudes of the N first detection values are all less than the first preset value, and the magnitudes of the M second detection values meet the first preset condition, that is, there is a large deviation between the actual positions of the M second detection regions of the earphone and the standard positions of the M second detection regions, it is determined that the earphone is in a non-wearing state.

According to the above state determining method provided in this embodiment of this application, based on the contact condition between the ear skin and the earphone in a normal wearing state, the earphone is divided into the N first detection regions that have a distance from the ear skin and the M second detection regions that are in contact with the ear skin. On this basis, in determining the state of the earphone, the detection values corresponding to the detection regions of the earphone are obtained. Further, in a case that any one of the first detection values is greater than or equal to the first preset value, or in a case that each of the first detection values is less than the first preset value and the M second detection values meet the first preset condition, it is determined that the earphone is in a non-wearing state. In this way, the state of the earphone is determined with reference to the first detection values of the first detection regions that are not in contact with the ear skin when the earphone is worn and the second detection values of the second detection regions that can be in contact with the ear skin when the earphone is worn, thereby improving the accuracy of determining the state of the earphone. Therefore, this prevents the earphone from being mistakenly triggered in a case that the earphone is in a non-wearing state, for example, a user holds the earphone or puts the earphone on a table or in a pocket, thus improving the operation reliability of the earphone and reducing energy consumption of the earphone.

In this embodiment of this application, after S102, the state determining method further includes the following S108.

S108: In a case that the N first detection values are less than the first preset value and at least one of the M second detection values meets a second preset condition, determine that the earphone is in a wearing state.

The first detection value is used to indicate a deviation between an actual position of the first detection region corresponding to the first detection value of the earphone and a standard position of the first detection region in the normal wearing state of the earphone. The first preset value is used as a basis for determining the magnitude of the first detection value, that is, a criterion for determining whether the actual position of the first detection region of the earphone is in a normal earphone wearing condition.

Specifically, when the first detection value is greater than or equal to the first preset value, it indicates that the first detection value is large, that is, the actual position of the first detection region is not in a normal earphone wearing condition. When the first detection value is less than the first preset value, it indicates that the first detection value is small, that is, the actual position of the first detection region is in a normal earphone wearing condition.

Further, the second detection value is used to indicate a deviation between an actual position of the second detection region corresponding to the second detection value of the earphone and a standard position of the second detection region in the normal wearing state of the earphone.

Further, when there is a small deviation between the actual position of one of the M second detection regions of the earphone and the standard positions of the second detection regions, the second preset condition is used to indicate the magnitude conditions of the second detection values corresponding to the second detection regions.

It can be understood that when the N first detection values corresponding to the N first detection regions of the earphone are all less than the first preset value, it indicates that the actual positions of the N first detection regions of the earphone all are in a normal earphone wearing condition. However, when the first detection value is represented as a skin capacitance value detected for the first detection region corresponding to the first detection value, if the earphone is in a non-wearing state, for example, the earphone is put on a table or in a pocket, skin capacitance values detected for the N first detection regions, that is, the first detection values, are also small. Therefore, when it is detected that the N first detection values are all less than the first preset value, the state of the earphone cannot be directly determined. It needs to further determine the actual state of the earphone with reference to the specific magnitudes of the M second detection values detected for the M second detection regions of the earphone.

Specifically, in determining the state of the earphone, the N first detection values detected for the N first detection regions of the earphone, and the M second detection values detected for the M second detection regions of the earphone can be obtained respectively. Then, the N first detection values obtained are compared with the first preset value pre-stored in the storage apparatus of the earphone. The specific magnitudes of the obtained M second detection values are analyzed and processed. In a case that the magnitudes of the N first detection values are all less than the first preset value, and the magnitude of at least one second detection value meets the second preset condition, that is, there is a small deviation between the actual position of the at least one second detection region and the standard position of the at least one second detection region, it is determined that the earphone is in a wearing state.

In the foregoing embodiment provided in this application, in determining the state of the earphone, the N first detection values of the N first detection regions of the earphone and the M second detection values of the M second detection regions of the earphone are obtained, and further, the earphone is determined to be in a wearing state in a case that the first detection values all are less than the first preset value and at least one of the second detection values meets the second preset condition. In this way, the state of the earphone is determined with reference to the first detection values of the first detection regions that are not in contact with the ear skin when the earphone is worn and the second detection values of the second detection regions that can be in contact with the ear skin when the earphone is worn, thereby improving the accuracy of determining the state of the earphone. Therefore, this prevents the earphone from being mistakenly triggered in a case that the earphone is in a non-wearing state, for example, a user holds the earphone or puts the earphone on a table or in a pocket, thus improving the operation reliability of the earphone and reducing energy consumption of the earphone.

In this embodiment of this application, the earphone includes N first sensors, the N first sensors are respectively configured to perform detection on the N first detection regions, and the N first detection values are respectively used to indicate contact statuses between the first detection regions and the skin. In a case that a first detection sub-value among the N first detection values is greater than or equal to the first preset value, a first detection region corresponding to the first detection sub-value is in contact with the skin; or in a case that a first detection sub-value among the N first detection values is less than the first preset value, a first detection region corresponding to the first detection sub-value has a distance from the skin.

In the state determining method provided in this embodiment of this application, the earphone includes N first sensors.

In actual application, the N first sensors correspond one-to-one with the N first detection regions of the earphone. Each first sensor detects its corresponding first detection region to obtain the first detection value of that first detection region.

Multiple first sensors can be provided. It can be understood that when a user normally wears the earphone, the relative position of the earphone to an ear is fixed within a certain range. Therefore, after the relative position of the earphone to the ear in a normal wearing condition is locked, as shown in FIG. 4, multiple first sensors can be correspondingly set in multiple first detection regions 208 of the earphone that are not in contact with the ear skin, so as to detect the multiple first detection regions 208 of the earphone by using the multiple first sensors, thereby determining the state of the earphone. In this way, whether the actual positions of the multiple first detection regions 208 of the earphone are in a normal earphone wearing condition is determined by using the multiple first sensors, the accuracy of identifying the non-wearing of the earphone can be effectively improved. This enhances the accuracy of determining the state of the earphone and reduces the possibility of the earphone being mistakenly triggered.

Further, the first sensor can be a wear sensor or a proximity sensor, and a specific representation form of the first detection value depends on the actual type of the first sensor corresponding to the first detection value.

Specifically, in a case that the first sensor is a proximity sensor, the first detection value is specifically represented as a distance value between the first detection region corresponding to the first detection value and the ear skin. In a case that the first sensor is a wear sensor, the first detection value is specifically represented as a skin capacitance value detected for the first detection region corresponding to the first detection value.

Further, the first detection value is used to indicate the contact status between the corresponding first detection region of the earphone and the skin.

Specifically, in a case that a first detection sub-value among the N first detection values is greater than or equal to the first preset value, it indicates that a skin capacitance value detected for the first detection region corresponding to the first detection sub-value is large, or the distance between the first detection region and the ear skin is large (for example, in a case that a user holds the earphone). This indicates that the first detection region corresponding to the first detection sub-value is in contact with the human skin. In a case that a first detection sub-value among the N first detection values is less than a first preset value, it indicates that a skin capacitance value detected for the first detection region corresponding to the first detection sub-value is small, or the distance between the first detection region and the ear skin is small (for example, in a case that the earphone is worn normally). This indicates that the first detection region corresponding to the first detection sub-value has a distance from the human skin, that is, the first detection region is not in contact with the human skin.

It can be understood that in the normal wearing state of the earphone, none of the N first detection regions in the earphone is in contact with the human skin. Therefore, in the process of determining the state of the earphone, once it is determined that a first detection sub-value among the N first detection values is greater than or equal to the first preset value, that is, it is determined that one of the N first detection regions is in contact with the human skin, it can be directly determined that the earphone is in a non-wearing state.

In the foregoing embodiment provided in this application, the earphone includes the N first sensors configured to perform detection on the N first detection regions respectively, and the N first detection values are used to indicate contact statuses between the first detection regions and the skin respectively. On this basis, contact statuses between the N first detection regions of the earphone and the skin can be determined according to the N first detection values detected by the N first sensors so as to determine the state of the earphone. This improves the accuracy of determining the state of the earphone, and prevents the earphone from being mistakenly triggered in a case that a user holds the earphone or puts the earphone on a table or in a pocket, thus improving the operation reliability of the earphone and reducing energy consumption of the earphone.

In this embodiment of this application, the earphone includes M second sensors, the M second sensors are respectively configured to perform detection on the M second detection regions, and the M second detection values are respectively used to indicate contact statuses between the second detection regions and the skin. In a case that a second detection sub-value among the M second detection values meets a second preset condition, a second detection region corresponding to the second detection sub-value is in contact with the skin; or in a case that a second detection sub-value among the M second detection values meets the first preset condition, a second detection region corresponding to the second detection sub-value has a distance from the skin.

In the state determining method provided in this embodiment of this application, the earphone includes M second sensors.

In actual application, the M second sensors correspond one-to-one with the M second detection regions of the earphone. Each second sensor detects its corresponding second detection region to obtain the second detection value of that second detection region.

The second sensor can be a wear sensor or a proximity sensor, and a specific representation form of the second detection value depends on the actual type of the second sensor corresponding to the second detection value.

Specifically, in a case that the second sensor is a proximity sensor, the second detection value is specifically represented as a distance value between the second detection region corresponding to the second detection value and the ear skin. In a case that the second sensor is a wear sensor, the second detection value is specifically represented as a skin capacitance value detected for the second detection region corresponding to the second detection value.

Further, the first preset condition is used to indicate the magnitude condition of the second detection value when there is a large deviation between the actual position of the second detection region of the earphone and the standard position of the second detection region. When there is a small deviation between the actual position of the second detection region of the earphone and the standard position of the second detection region, the second preset condition is used to indicate the magnitude condition of the second detection value corresponding to the second detection region.

Further, the second detection value is used to indicate the contact status between the corresponding second detection region of the earphone and the skin.

Specifically, in a case that a second detection sub-value among the M second detection values meets a second preset condition, it indicates that there is a small deviation between the actual position of the second detection region corresponding to the second detection sub-value and the standard position of the second detection region, that is, a skin capacitance value detected for the second detection region is large, or the distance between the second detection region and the ear skin is small. This indicates that the second detection region corresponding to the second detection sub-value is in contact with the human skin. In a case that a second detection sub-value among the M second detection values meets the first preset condition, it indicates that there is a large deviation between the actual position of the second detection region corresponding to the second detection sub-value and the standard position of the second detection region, that is, a skin capacitance value detected for the second detection region is small (for example, the earphone is put on a table or in a pocket), or the distance between the second detection region and the ear skin is large (for example, a use holds the earphone, or the earphone is put on a table or in a pocket). This indicates that the second detection region corresponding to the second detection sub-value has a distance from the skin, indicating that, the second detection region corresponding to the second detection sub-value is not in contact with the human skin.

In the foregoing embodiment provided in this application, the earphone includes the M second sensors configured to perform detection on the M second detection regions respectively, and the M second detection values are used to indicate contact statuses between the second detection regions and the skin respectively. On this basis, contact statuses between the M second detection regions of the earphone and the skin can be determined according to the M second detection values detected by the M second sensors so as to determine the state of the earphone. This improves the accuracy of determining the state of the earphone, and prevents the earphone from being mistakenly triggered in a case that a user holds the earphone or puts the earphone on a table or in a pocket, thus improving the operation reliability of the earphone and reducing energy consumption of the earphone.

In this embodiment of this application, the first sensor is a wear sensor or a proximity sensor. In a case that the first sensor is a wear sensor, the first detection value is a first capacitance value of the skin, or in a case that the first sensor is a proximity sensor, the first detection value is a first distance value between the proximity sensor and the skin.

In the state determining method provided in this embodiment of this application, the first sensor can specifically be a wear sensor or a proximity sensor.

Further, a specific representation form of the first detection value depends on the actual type of the first sensor corresponding to the first detection value.

Specifically, in a case that the first sensor is a wear sensor, the first detection value is specifically represented as a first capacitance value of the skin detected for the first detection region corresponding to the first detection value. In a case that the first sensor is a proximity sensor, the first detection value is specifically represented as a first distance value between the first detection region corresponding to the first detection value and the ear skin.

In a case that the first detection value is a first capacitance value of the skin, the first capacitance value can be used to indicate the contact area between the first detection region corresponding to the first capacitance value and the human skin, and the magnitude of the first capacitance value is directly proportional to the contact area between the first detection region and the human skin. That is, a larger first capacitance value means a larger contact area between the first detection region corresponding to the first capacitance value and the human skin. A smaller first capacitance value means a smaller contact area between the first detection region corresponding to the first capacitance value and the human skin.

It can be understood that in the normal wearing state of the earphone, none of the N first detection regions in the earphone is in contact with the human skin, and the N first detection regions all are located at positions relatively close to the ear skin. Therefore, in the process of determining the state of the earphone, the contact area between the corresponding first detection region and the human skin can be determined based on the first capacitance value obtained or the distance between the first detection region and the ear skin can be determined based on the first distance value obtained, to determine the deviation between the actual position of the first detection region and the standard position of the first detection region in the normal wearing state of the earphone, so as to determine the state of the earphone based on the deviation.

In the foregoing embodiment provided in this application, the first sensor can be a wear sensor or a proximity sensor, and a specific representation form of the first detection value depends on the actual type of the first sensor corresponding to the first detection value. In this way, different types of first sensors can be configured to perform detection on the first detection regions to determine the state of the earphone. This ensures the accuracy of determining the state of the earphone while improving the flexibility of determining the state of the earphone and the design of the earphone.

In this embodiment of this application, the second sensor is a wear sensor or a proximity sensor. In a case that the second sensor is a wear sensor, the second detection value is a second capacitance value of the skin, the first preset condition is that the second detection value is less than a second preset value, and the second preset condition is that the second detection value is greater than or equal to the second preset value, or in a case that the second sensor is a proximity sensor, the second detection value is a second distance value between the proximity sensor and the skin, the first preset condition is that the second detection value is greater than a third preset value, and the second preset condition is that the second detection value is less than or equal to the third preset value.

In the state determining method provided in this embodiment of this application, the second sensor can specifically be a wear sensor or a proximity sensor.

Further, a specific representation form of the second detection value depends on the actual type of the second sensor corresponding to the second detection value.

Specifically, in a case that the second sensor is a wear sensor, the second detection value is specifically represented as a second capacitance value of the skin detected for the second detection region corresponding to the second detection value. The second capacitance value can be used to indicate the contact area between the second detection region corresponding to the second capacitance value and the human skin. On this basis, the first preset condition is that the second detection value is less than the second preset value, that is, the contact area between the second detection region and the human skin is small. The second preset condition is that the second detection value is greater than or equal to the second preset value, that is, the contact area between the second detection region and the human skin is large.

Further, in a case that the second sensor is a proximity sensor, the second detection value is specifically represented as a second distance value between the second detection region corresponding to the second detection value and the ear skin. On this basis, the first preset condition is that the second detection value is greater than a third preset value, that is, the distance between the second detection region and the ear skin is large. The second preset condition is that the second detection value is less than or equal to the third preset value, that is, the distance between the second detection region and the ear skin is small.

It should be noted that the second preset value and the third preset value can be obtained by repeatedly testing earphones before factory delivery of earphones. Technicians can alternatively set the specific magnitudes of the second preset value and the third preset value depending on an actual application situation. This is not specifically limited herein.

In the foregoing embodiment provided in this application, the second sensor can be a wear sensor or a proximity sensor, and a specific representation form of the second detection value depends on the actual type of the second sensor corresponding to the second detection value. In this way, different types of second sensors can be configured to perform detection on the second detection regions to determine the state of the earphone. This ensures the accuracy of determining the state of the earphone while further improving the flexibility of determining the state of the earphone and the design of the earphone.

Additionally, it should be noted that in actual application, the first sensor and second sensor can alternatively be inductive sensors, pressure sensors, photosensitive sensors, and other types of sensors. A user can make a choice depending on an actual condition. This is not specifically limited herein.

In a case that the first sensor and the second sensor are pressure sensors, detection values of regions are pressure values detected by the pressure sensors. In a case that the first sensor and the second sensor are inductive sensors, detection values of regions are inductance values detected by the inductive sensors. In a case that the first sensor and the second sensor are photosensitive sensors, detection values of regions are photosensitive signal values detected by the photosensitive sensors.

In conclusion, according to the state determining method provided in this embodiment of this application, the state of the earphone is accurately determined with reference to the N first detection values of the N first detection regions that are not in contact with the ear skin when the earphone is worn and the M second detection values of the M second detection regions that can be in contact with the ear skin when the earphone is worn, thereby improving the accuracy of determining the state of the earphone. Therefore, this prevents the earphone from being mistakenly triggered in a case that the earphone is in a non-wearing state, for example, a user holds the earphone or puts the earphone on a table or in a pocket, thus improving the operation reliability of the earphone and reducing energy consumption of the earphone.

In actual application, a logic determining table can be pre-stored within a storage area of the state determining apparatus. The logic determining table includes comparison results between the first detection values of the first detection regions of the earphone and the first preset value. If the first detection value is greater than or equal to the first preset value, it is recorded as "1". If the first detection value is less than the first preset value, it is recorded as "0". The logic determining table further includes matching results between the second detection values of the second detection regions of the earphone and the first preset condition or the second preset condition. If the second detection value meets the first preset condition, it is recorded as "0". If the second detection value meets the second preset condition, it is recorded as "1". The logic determining table further includes state determining results of the earphone in each case of the first detection value and the second detection value.

On this basis, in determining the state of the earphone, the first detection value of each first detection region of the earphone can be compared with the first preset value, and the second detection value of each second detection region of the earphone can be compared with the first preset condition or the second preset condition, so as to obtain a group of logic determining values composed of "0" or "1". This group of logic determining values can then be compared against multiple groups of logic determining values in the logic determining table to determine the state of the earphone.

The following describes the state determining method proposed in the embodiments of this application by using eight specific embodiments.

Embodiment 1: The earphone includes a first wear sensor and a second wear sensor. The first wear sensor is configured to perform detection on the first detection region of the earphone to obtain a first capacitance value. The second wear sensor is configured to perform detection on the second detection region of the earphone to obtain a second capacitance value. On this basis, in determining the state of the earphone, the state of the earphone can be determined based on the logic determining rules in Table 1 below. If the first capacitance value is greater than or equal to the first preset value, it is recorded as "1". If the first capacitance value is less than the first preset value, it is recorded as "0". If the second capacitance value is greater than or equal to the second preset value, it is recorded as "1". If the second capacitance value is less than the second preset value, it is recorded as "0".

**Table 1 Earphone state logic determining table 1**

| Whether a corresponding detection region is in contact with an ear canal when an earphone is worn | No | Yes | Earphone state |
|---|---|---|---|
| Sensor | First wear sensor | Second wear sensor | |
| Detection value | First capacitance value | Second capacitance value | |
| Logic determining value | 1 | 1 | Non-wearing state |
| | 1 | 0 | Non-wearing state |
| | 0 | 1 | Wearing state |
| | 0 | 0 | Non-wearing state |

It can be learned from Table 1 that when the earphone includes two wear sensors that respectively detect the first detection region and the second detection region of the earphone to determine the state of the earphone, in a case that the first capacitance value is greater than or equal to the first preset value, and in a case that the first capacitance value is less than the first preset value and the second capacitance value is less than the second preset value, it is determined that the earphone is in a non-wearing state. In a case that the first capacitance value is less than the first preset value and the second capacitance value is greater than or equal to the second preset value, it is determined that the earphone is in a wearing state.

Embodiment 2: The earphone includes a first wear sensor, a second wear sensor, and a third wear sensor. The first wear sensor is configured to perform detection on the first detection region of the earphone to obtain a first capacitance value. The second wear sensor and the third wear sensor are both configured to perform detection on the second detection regions of the earphone to obtain second capacitance values. On this basis, in determining the state of the earphone, the state of the earphone can be determined based on the logic determining rules in Table 2 below. If the first capacitance value is greater than or equal to the first preset value, it is recorded as "1". If the first capacitance value is less than the first preset value, it is recorded as "0". If the second capacitance value is greater than or equal to the second preset value, it is recorded as "1". If the second capacitance value is less than the second preset value, it is recorded as "0".

It can be learned from Table 2 that in a case that the earphone includes one wear sensor configured to perform detection on the first detection region of the earphone, and two wear sensors configured to perform detection on the second detection regions of the earphone, in determining the state of the earphone, in a case that the first capacitance value detected by the first wear sensor is greater than or equal to the first preset value, and in a case that the first capacitance value detected by the first wear sensor is less than the first preset value and the second capacitance values detected by the second wear sensor and the third wear sensor are both less than the second preset value, it is determined that the earphone is in a non-wearing state. In a case that the first capacitance value detected by the first wear sensor is less than the first preset value and the second capacitance value detected by the second wear sensor and/or the third wear sensor is greater than or equal to the second preset value, it is determined that the earphone is in a wearing state.

**Table 2 Earphone state logic determining table 2**

| Whether a corresponding detection region is in contact with an ear canal when an earphone is worn | No | Yes | Yes | Earphone state |
|---|---|---|---|---|
| Sensor | First wear sensor | Second wear sensor | Third wear sensor | |
| Detection value | First capacitance value | Second capacitance value | Second capacitance value | |
| Logic determining value | 1 | 1 | 1 | Non-wearing state |
| | 1 | 1 | 0 | Non-wearing state |
| | 1 | 0 | 1 | Non-wearing state |
| | 1 | 0 | 0 | Non-wearing state |
| | 0 | 1 | 1 | Wearing state |
| | 0 | 1 | 0 | Wearing state |
| | 0 | 0 | 1 | Wearing state |
| | 0 | 0 | 0 | Non-wearing state |

Embodiment 3: The earphone includes a first proximity sensor, a second proximity sensor, and a third proximity sensor. The first proximity sensor is configured to perform detection on the first detection region of the earphone to obtain a first distance value. The second proximity sensor and the third proximity sensor are both configured to perform detection on the second detection regions of the earphone to obtain second distance values. On this basis, in determining the state of the earphone, the state of the earphone can be determined based on the logic determining rules in Table 3 below. If the first distance value is greater than or equal to the first preset value, it is recorded as "1". If the first distance value is less than the first preset value, it is recorded as "0". If the second distance value is greater than the third preset value, it is recorded as "0". If the second distance value is less than or equal to the third preset value, it is recorded as "1".

It can be learned from Table 3 that in a case that the earphone includes one proximity sensor configured to perform detection on the first detection region of the earphone, and two proximity sensors configured to perform detection on the second detection regions of the earphone, in determining the state of the earphone, in a case that the first distance value detected by the first proximity sensor is greater than or equal to the first preset value, and in a case that the first distance value detected by the first proximity sensor is less than the first preset value and the second distance values detected by the second proximity sensor and the third proximity sensor are both greater than the third preset value, it is determined that the earphone is in a non-wearing state. In a case that the first distance value detected by the first proximity sensor is less than the first preset value and the second distance value detected by the second proximity sensor and/or the third proximity sensor is less than or equal to the third preset value, it is determined that the earphone is in a wearing state.

**Table 3 Earphone state logic determining table 3**

| Whether a corresponding detection region is in contact with an ear canal when an earphone is worn | No | Yes | Yes | Earphone state |
|---|---|---|---|---|
| Sensor | First proximity sensor | Second proximity sensor | Third proximity sensor | |
| Detection value | First distance value | Second distance value | Second distance value | |
| Logic determining value | 1 | 1 | 1 | Non-wearing state |
| | 1 | 1 | 0 | Non-wearing state |
| | 1 | 0 | 1 | Non-wearing state |
| | 1 | 0 | 0 | Non-wearing state |
| | 0 | 1 | 1 | Wearing state |
| | 0 | 1 | 0 | Wearing state |
| | 0 | 0 | 1 | Wearing state |
| | 0 | 0 | 0 | Non-wearing state |

Embodiment 4: The earphone includes a first proximity sensor, a first wear sensor, and a second wear sensor. The first proximity sensor is configured to perform detection on the first detection region of the earphone to obtain a first distance value. The first wear sensor and the second wear sensor are both configured to perform detection on the second detection regions of the earphone to obtain second capacitance values. On this basis, in determining the state of the earphone, the state of the earphone can be determined based on the logic determining rules in Table 4 below. If the first distance value is greater than or equal to the first preset value, it is recorded as "1". If the first distance value is less than the first preset value, it is recorded as "0". If the second capacitance value is greater than or equal to the second preset value, it is recorded as "1". If the second capacitance value is less than the second preset value, it is recorded as "0".

**Table 4 Earphone state logic determining table 4**

| Whether a corresponding detection region is in contact with an ear canal when an earphone is worn | No | Yes | Yes | Earphone state |
|---|---|---|---|---|
| Sensor | First proximity sensor | First wear sensor | Second wear sensor | |
| Detection value | First distance value | Second capacitance value | Second capacitance value | |
| Logic determining value | 1 | 1 | 1 | Non-wearing state |
| | 1 | 1 | 0 | Non-wearing state |
| | 1 | 0 | 1 | Non-wearing state |
| | 1 | 0 | 0 | Non-wearing state |
| | 0 | 1 | 1 | Wearing state |
| | 0 | 1 | 0 | Wearing state |
| | 0 | 0 | 1 | Wearing state |
| | 0 | 0 | 0 | Non-wearing state |

It can be learned from Table 4 that in a case that the earphone includes one proximity sensor configured to perform detection on the first detection region of the earphone, and two wear sensors configured to perform detection on the second detection regions of the earphone, in determining the state of the earphone, in a case that the first distance value detected by the first proximity sensor is greater than or equal to the first preset value, and in a case that the first distance value detected by the first proximity sensor is less than the first preset value and the second capacitance values detected by the first wear sensor and the second wear sensor are both less than the second preset value, it is determined that the earphone is in a non-wearing state. In a case that the first distance value detected by the first proximity sensor is less than the first preset value and the second capacitance value detected by the first wear sensor and/or the second wear sensor is greater than or equal to the second preset value, it is determined that the earphone is in a wearing state.

Embodiment 5: The earphone includes a first wear sensor, a first proximity sensor, and a second proximity sensor. The first wear sensor is configured to perform detection on the first detection region of the earphone to obtain a first capacitance value. The first proximity sensor and the second proximity sensor are both configured to perform detection on the second detection regions of the earphone to obtain second distance values. On this basis, in determining the state of the earphone, the state of the earphone can be determined based on the logic determining rules in Table 5 below. If the first capacitance value is greater than or equal to the first preset value, it is recorded as "1". If the first capacitance value is less than the first preset value, it is recorded as "0". If the second distance value is greater than the third preset value, it is recorded as "0". If the second distance value is less than or equal to the third preset value, it is recorded as "1".

**Table 5 Earphone state logic determining table 5**

| Whether a corresponding detection region is in contact with an ear canal when an earphone is worn | No | Yes | Yes | Earphone state |
|---|---|---|---|---|
| Sensor | First wear sensor | First proximity sensor | Second proximity sensor | |
| Detection value | First capacitance value | Second distance value | Second distance value | |
| Logic determining value | 1 | 1 | 1 | Non-wearing state |
| | 1 | 1 | 0 | Non-wearing state |
| | 1 | 0 | 1 | Non-wearing state |
| | 1 | 0 | 0 | Non-wearing state |
| | 0 | 1 | 1 | Wearing state |
| | 0 | 1 | 0 | Wearing state |
| | 0 | 0 | 1 | Wearing state |
| | 0 | 0 | 0 | Non-wearing state |

It can be learned from Table 5 that in a case that the earphone includes one wear sensor configured to perform detection on the first detection region of the earphone, and two proximity sensors configured to perform detection on the second detection regions of the earphone, in determining the state of the earphone, in a case that the first capacitance value detected by the first wear sensor is greater than or equal to the first preset value, and in a case that the first capacitance value detected by the first wear sensor is less than the first preset value and the second distance values detected by the first proximity sensor and the second proximity sensor are both greater than the third preset value, it is determined that the earphone is in a non-wearing state. In a case that the first capacitance value detected by the first wear sensor is less than the first preset value and the second distance value detected by the first proximity sensor and/or the second proximity sensor is less than or equal to the third preset value, it is determined that the earphone is in a wearing state.

Embodiment 6: The earphone includes a first wear sensor, a second wear sensor, and a first proximity sensor. The first wear sensor is configured to perform detection on the first detection region of the earphone to obtain a first capacitance value. The second wear sensor is configured to perform detection on the corresponding second detection region of the earphone to obtain a second capacitance value. The first proximity sensor is configured to perform detection on the corresponding second detection region of the earphone to obtain a second distance value. On this basis, in determining the state of the earphone, the state of the earphone can be determined based on the logic determining rules in Table 6 below. If the first capacitance value is greater than or equal to the first preset value, it is recorded as "1". If the first capacitance value is less than the first preset value, it is recorded as "0". If the second capacitance value is greater than or equal to the second preset value, it is recorded as "1". If the second capacitance value is less than the second preset value, it is recorded as "0". If the second distance value is greater than the third preset value, it is recorded as "0". If the second distance value is less than or equal to the third preset value, it is recorded as "1".

**Table 6 Earphone state logic determining table 6**

| Whether a corresponding detection region is in contact with an ear canal when an earphone is worn | No | Yes | Yes | Earphone state |
|---|---|---|---|---|
| Sensor | First wear sensor | Second wear sensor | First proximity sensor | |
| Detection value | First capacitance value | Second capacitance value | Second distance value | |
| Logic determining value | 1 | 1 | 1 | Non-wearing state |
| | 1 | 1 | 0 | Non-wearing state |
| | 1 | 0 | 1 | Non-wearing state |
| | 1 | 0 | 0 | Non-wearing state |
| | 0 | 1 | 1 | Wearing state |
| | 0 | 1 | 0 | Wearing state |
| | 0 | 0 | 1 | Wearing state |
| | 0 | 0 | 0 | Non-wearing state |

It can be learned from Table 6 that in a case that the earphone includes one wear sensor configured to perform detection on the first detection region of the earphone, one wear sensor configured to perform detection on the second detection region of the earphone, and one proximity sensor configured to perform detection on the second detection region of the earphone, in determining the state of the earphone, in a case that the first capacitance value detected by the first wear sensor is greater than or equal to the first preset value, and in a case that the first capacitance value detected by the first wear sensor is less than the first preset value, the second capacitance value detected by the second wear sensor is less than the second preset value, and the second distance value detected by the first proximity sensor is greater than the third preset value, it is determined that the earphone is in a non-wearing state. In a case that the first capacitance value detected by the first wear sensor is less than the first preset value, the second capacitance value detected by the second wear sensor is greater than or equal to the second preset value, and/or the second distance value detected by the first proximity sensor is less than or equal to the third preset value, it is determined that the earphone is in a wearing state.

**Table 7 Earphone state logic determining table 7**

| Whether a corresponding detection region is in contact with an ear canal when an earphone is worn | No | Yes | Yes | Earphone state |
|---|---|---|---|---|
| Sensor | First proximity sensor | First wear sensor | Second proximity sensor | |
| Detection value | First distance value | Second capacitance value | Second distance value | |
| Logic determining value | 1 | 1 | 1 | Non-wearing state |
| | 1 | 1 | 0 | Non-wearing state |
| | 1 | 0 | 1 | Non-wearing state |
| | 1 | 0 | 0 | Non-wearing state |
| | 0 | 1 | 1 | Wearing state |
| | 0 | 1 | 0 | Wearing state |
| | 0 | 0 | 1 | Wearing state |
| | 0 | 0 | 0 | Non-wearing state |

Embodiment 7: The earphone includes a first proximity sensor, a second proximity sensor, and a first wear sensor. The first proximity sensor is configured to perform detection on the first detection region of the earphone to obtain a first distance value. The second proximity sensor is configured to perform detection on the corresponding second detection region of the earphone to obtain a second distance value. The first wear sensor is configured to perform detection on the corresponding second detection region of the earphone to obtain a second capacitance value. On this basis, in determining the state of the earphone, the state of the earphone can be determined based on the logic determining rules in Table 7 above. If the first distance value is greater than or equal to the first preset value, it is recorded as "1". If the first distance value is less than the first preset value, it is recorded as "0". If the second capacitance value is greater than or equal to the second preset value, it is recorded as "1". If the second capacitance value is less than the second preset value, it is recorded as "0". If the second distance value is greater than the third preset value, it is recorded as "0". If the second distance value is less than or equal to the third preset value, it is recorded as "1".

It can be learned from Table 7 that in a case that the earphone includes one proximity sensor configured to perform detection on the first detection region of the earphone, one wear sensor configured to perform detection on the second detection region of the earphone, and one proximity sensor configured to perform detection on the second detection region of the earphone, in determining the state of the earphone, in a case that the first distance value detected by the first proximity sensor is greater than or equal to the first preset value, and in a case that the first distance value detected by the first proximity sensor is less than the first preset value, the second capacitance value detected by the first wear sensor is less than the second preset value, and the second distance value detected by the second proximity sensor is greater than the third preset value, it is determined that the earphone is in a non-wearing state. In a case that the first capacitance value detected by the first proximity sensor is less than the first preset value, the second capacitance value detected by the first wear sensor is greater than or equal to the second preset value, and/or the second distance value detected by the second proximity sensor is less than or equal to the third preset value, it is determined that the earphone is in a wearing state.

Embodiment 8: The earphone includes a first wear sensor, a second wear sensor, a third wear sensor, and a fourth wear sensor. The first wear sensor and the second wear sensor are both configured to perform detection on the first detection regions of the earphone to obtain first capacitance values. The third wear sensor and the fourth wear sensor are both configured to perform detection on the second detection regions of the earphone to obtain second capacitance values. On this basis, in determining the state of the earphone, the state of the earphone can be determined based on the logic determining rules in Table 8 below. If the first capacitance value is greater than or equal to the first preset value, it is recorded as "1". If the first capacitance value is less than the first preset value, it is recorded as "0". If the second capacitance value is greater than or equal to the second preset value, it is recorded as "1". If the second capacitance value is less than the second preset value, it is recorded as "0".

It can be learned from Table 8 that in a case that the earphone includes two wear sensors configured to perform detection on the first detection regions of the earphone, and two wear sensors configured to perform detection on the second detection regions of the earphone, in determining the state of the earphone, in a case that the first capacitance value detected by the first wear sensor and/or the second wear sensor is greater than or equal to the first preset value, and in a case that the first capacitance values detected by the first wear sensor and the second wear sensor are both less than the first preset value and the second capacitance values detected by the third wear sensor and the fourth wear sensor are both less than the second preset value, it is determined that the earphone is in a non-wearing state. In a case that the first capacitance values detected by the first wear sensor and the second wear sensor are both less than the first preset value and the second capacitance value detected by the third wear sensor and/or the fourth wear sensor is greater than or equal to the second preset value, it is determined that the earphone is in a wearing state.

**Table 8 Earphone state logic determining table 8**

| Whether a corresponding detection region is in contact with an ear canal when an earphone is worn | No | No | Yes | Yes | Earphone state |
|---|---|---|---|---|---|
| Sensor | First wear sensor | Second wear sensor | Third wear sensor | Fourth wear sensor | |
| Detection value | First capacitance value | First capacitance value | Second capacitance value | Second capacitance value | |
| Logic determining value | 1 | 1 | 1 | 1 | Non-wearing state |
| | 1 | 1 | 1 | 0 | Non-wearing state |
| | 1 | 1 | 0 | 1 | Non-wearing state |
| | 1 | 1 | 0 | 0 | Non-wearing state |
| | 1 | 0 | 1 | 1 | Non-wearing state |
| | 1 | 0 | 1 | 0 | Non-wearing state |
| | 1 | 0 | 0 | 1 | Non-wearing state |
| | 1 | 0 | 0 | 0 | Non-wearing state |
| | 0 | 1 | 1 | 1 | Non-wearing state |
| | 0 | 1 | 1 | 0 | Non-wearing state |
| | 0 | 1 | 0 | 1 | Non-wearing state |
| | 0 | 1 | 0 | 0 | Non-wearing state |
| | 0 | 0 | 1 | 1 | Wearing state |
| | 0 | 0 | 1 | 0 | Wearing state |
| | 0 | 0 | 0 | 1 | Wearing state |
| | 0 | 0 | 0 | 0 | Non-wearing state |

The state determining method provided in this embodiment of this application can be executed by the state determining apparatus. The state determining apparatus provided in the embodiments of this application is described through an example in which the state determining apparatus executes the state determining method in the embodiments of this application.

As shown in FIG. 5, an embodiment of this application provides a state determining apparatus 500, which is applied to an earphone. The earphone includes N first detection regions and M second detection regions. The state determining apparatus 500 may include the following obtaining unit 502 and processing unit 504.

The obtaining unit 502 is configured to obtain N first detection values corresponding to the N first detection regions and M second detection values corresponding to the M second detection regions.

The processing unit 504 is configured to: in a case that at least one of the N first detection values is greater than or equal to a first preset value, determine that the earphone is in a non-wearing state.

The processing unit 504 is further configured to: in a case that the N first detection values are less than the first preset value and the M second detection values meet a first preset condition, determine that the earphone is in a non-wearing state.

In a wearing state of the earphone, the N first detection regions have a distance from the skin, and the M second detection regions are in contact with the skin.

According to the above state determining apparatus 500 provided in this embodiment of this application, based on the contact condition between the ear skin and the earphone in a normal wearing state, the earphone is divided into the N first detection regions that have a distance from the ear skin and the M second detection regions that are in contact with the ear skin. On this basis, in determining the state of the earphone, the obtaining unit 502 obtains the detection values corresponding to the detection regions of the earphone. Further, in a case that any one of the first detection values is greater than or equal to the first preset value, or in a case that each of the first detection values is less than the first preset value and the M second detection values meet the first preset condition, the processing unit 504 determines that the earphone is in a non-wearing state. In this way, the state of the earphone is determined with reference to the first detection values of the first detection regions that are not in contact with the ear skin when the earphone is worn and the second detection values of the second detection regions that can be in contact with the ear skin when the earphone is worn, thereby improving the accuracy of determining the state of the earphone. Therefore, this prevents the earphone from being mistakenly triggered in a case that the earphone is in a non-wearing state, for example, a user holds the earphone or puts the earphone on a table or in a pocket, thus improving the operation reliability of the earphone and reducing energy consumption of the earphone.

In this embodiment of this application, the processing unit 504 is further configured to: in a case that the N first detection values are less than the first preset value and at least one of the M second detection values meets a second preset condition, determine that the earphone is in a wearing state.

In the foregoing embodiment provided in this application, in determining the state of the earphone, after the obtaining unit 502 obtains the N first detection values of the N first detection regions of the earphone and the M second detection values of the M second detection regions of the earphone, the processing unit 504 further determines, in a case that the first detection values all are less than the first preset value and at least one of the second detection values meets the second preset condition, that the earphone is in a wearing state. In this way, the state of the earphone is determined with reference to the first detection values of the first detection regions that are not in contact with the ear skin when the earphone is worn and the second detection values of the second detection regions that can be in contact with the ear skin when the earphone is worn, thereby improving the accuracy of determining the state of the earphone. Therefore, this prevents the earphone from being mistakenly triggered in a case that the earphone is in a non-wearing state, for example, a user holds the earphone or puts the earphone on a table or in a pocket, thus improving the operation reliability of the earphone and reducing energy consumption of the earphone.

In this embodiment of this application, the earphone includes N first sensors, the N first sensors are respectively configured to perform detection on the N first detection regions, and the N first detection values are respectively used to indicate contact statuses between the first detection regions and the skin. In a case that a first detection sub-value among the N first detection values is greater than or equal to the first preset value, a first detection region corresponding to the first detection sub-value is in contact with the skin; or in a case that a first detection sub-value among the N first detection values is less than the first preset value, a first detection region corresponding to the first detection sub-value has a distance from the skin.

In the foregoing embodiment provided in this application, the earphone includes the N first sensors configured to perform detection on the N first detection regions respectively, and the N first detection values are used to indicate contact statuses between the first detection regions and the skin respectively. On this basis, contact statuses between the N first detection regions of the earphone and the skin can be determined according to the N first detection values detected by the N first sensors so as to determine the state of the earphone. This improves the accuracy of determining the state of the earphone, and prevents the earphone from being mistakenly triggered in a case that a user holds the earphone or puts the earphone on a table or in a pocket, thus improving the operation reliability of the earphone and reducing energy consumption of the earphone.

In this embodiment of this application, the earphone includes M second sensors, the M second sensors are respectively configured to perform detection on the M second detection regions, and the M second detection values are respectively used to indicate contact statuses between the second detection regions and the skin. In a case that a second detection sub-value among the M second detection values meets a second preset condition, a second detection region corresponding to the second detection sub-value is in contact with the skin; or in a case that a second detection sub-value among the M second detection values meets the first preset condition, a second detection region corresponding to the second detection sub-value has a distance from the skin.

In the foregoing embodiment provided in this application, the earphone includes the M second sensors configured to perform detection on the M second detection regions respectively, and the M second detection values are used to indicate contact statuses between the second detection regions and the skin respectively. On this basis, contact statuses between the M second detection regions of the earphone and the skin can be determined according to the M second detection values detected by the M second sensors so as to determine the state of the earphone. This improves the accuracy of determining the state of the earphone, and prevents the earphone from being mistakenly triggered in a case that a user holds the earphone or puts the earphone on a table or in a pocket, thus improving the operation reliability of the earphone and reducing energy consumption of the earphone.

In this embodiment of this application, the first sensor is a wear sensor or a proximity sensor. In a case that the first sensor is a wear sensor, the first detection value is a first capacitance value of the skin, or in a case that the first sensor is a proximity sensor, the first detection value is a first distance value between the proximity sensor and the skin.

In the foregoing embodiment provided in this application, the first sensor can be a wear sensor or a proximity sensor, and a specific representation form of the first detection value depends on the actual type of the first sensor corresponding to the first detection value. In this way, different types of first sensors can be configured to perform detection on the first detection regions to determine the state of the earphone. This ensures the accuracy of determining the state of the earphone while improving the flexibility of determining the state of the earphone and the design of the earphone.

In this embodiment of this application, the second sensor is a wear sensor or a proximity sensor. In a case that the second sensor is a wear sensor, the second detection value is a second capacitance value of the skin, the first preset condition is that the second detection value is less than a second preset value, and the second preset condition is that the second detection value is greater than or equal to the second preset value, or in a case that the second sensor is a proximity sensor, the second detection value is a second distance value between the proximity sensor and the skin, the first preset condition is that the second detection value is greater than a third preset value, and the second preset condition is that the second detection value is less than or equal to the third preset value.

In the foregoing embodiment provided in this application, the second sensor can be a wear sensor or a proximity sensor, and a specific representation form of the second detection value depends on the actual type of the second sensor corresponding to the second detection value. In this way, different types of second sensors can be configured to perform detection on the second detection regions to determine the state of the earphone. This ensures the accuracy of determining the state of the earphone while further improving the flexibility of determining the state of the earphone and the design of the earphone.

The state determining apparatus 500 in the embodiments of this application can be an electronic device, or a component in an electronic device such as an integrated circuit or chip. The electronic device may be a terminal or other devices than terminals. For example, the electronic device may be a mobile phone, a tablet computer, a notebook computer, a palmtop computer, a vehicle-mounted electronic device, a mobile internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook, or a personal digital assistant (personal digital assistant, PDA), or may be a server, a network attached storage (Network Attached Storage, NAS), a personal computer (personal computer, PC), a television (television, TV), a teller machine, a self-service machine, or the like. This is not specifically limited in the embodiments of this application.

The state determining apparatus 500 in this embodiment of this application may be an apparatus having an operating system. The operating system may be an android (Android) operating system, an iOS operating system, or another possible operating system. This is not specifically limited in an embodiment of this application.

The state determining apparatus 500 provided in this embodiment of this application can implement the processes implemented in the method embodiment in FIG. 1. To avoid repetition, details are not described herein again.

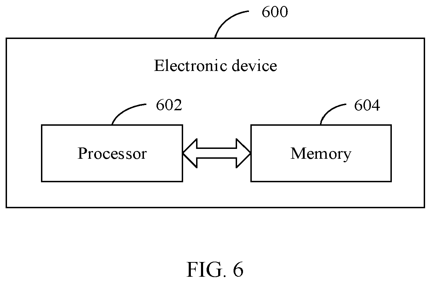

Optionally, as shown in FIG. 6, an embodiment of this application further provides an electronic device 600 including a processor 602 and a memory 604. The memory 604 stores a program or instruction capable of running on the processor 602. When the program or the instruction is executed by the processor 602, the steps of the foregoing embodiment of the state determining method in the first aspect are implemented, with the same technical effects achieved. To avoid repetition, details are not described herein again.

It should be noted that the electronic device in this embodiment of this application includes the foregoing mobile electronic device and non-mobile electronic device.

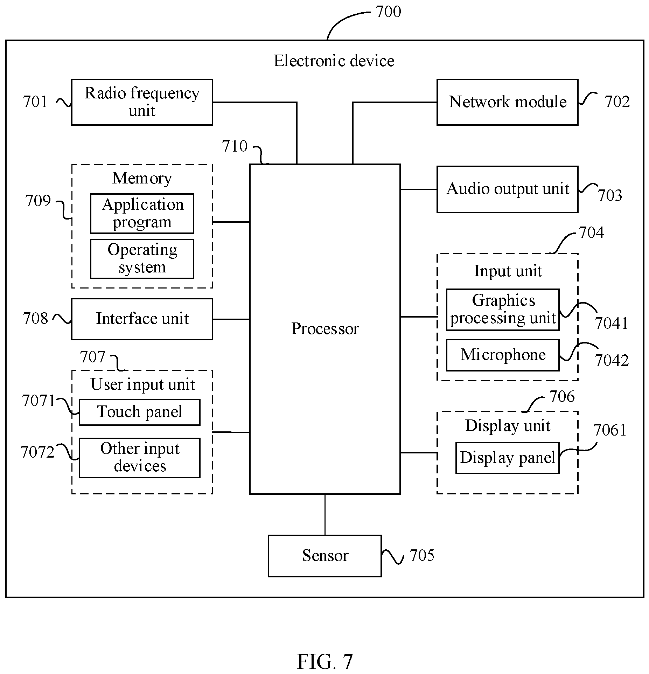

FIG. 7 is a schematic diagram of a hardware structure of an electronic device according to an embodiment of this application.

The electronic device 700 includes but is not limited to components such as a radio frequency unit 701, a network module 702, an audio output unit 703, an input unit 704, a sensor 705, a display unit 706, a user input unit 707, an interface unit 708, a memory 709, and a processor 710.

It can be understood by those skilled in the art that the electronic device 700 may further include a power supply (for example, a battery) supplying power to the components. The power supply may be logically connected to the processor 710 via a power management system, so that functions such as charge management, discharge management, and power consumption management are implemented via the power management system. The structure of the electronic device shown in FIG. 7 does not constitute a limitation on the electronic device. The electronic device may include more or fewer components than shown in the drawing, or combine some of the components, or arrange the components differently. Details are not described herein.

The electronic device 700 in this embodiment of this application can be configured to implement the steps of the state determining method in the foregoing first aspect.

The processor 710 is configured to obtain N first detection values corresponding to the N first detection regions and M second detection values corresponding to the M second detection regions.

The processor 710 is further configured to: in a case that at least one of the N first detection values is greater than or equal to a first preset value, determine that the earphone is in a non-wearing state.

The processor 710 is further configured to: in a case that the N first detection values are less than the first preset value and the M second detection values meet a first preset condition, determine that the earphone is in a non-wearing state.

In a wearing state of the earphone, the N first detection regions have a distance from the skin, and the M second detection regions are in contact with the skin.

In this embodiment of this application, based on the contact condition between the ear skin and the earphone in a normal wearing state, the earphone is divided into the N first detection regions that have a distance from the ear skin and the M second detection regions that are in contact with the ear skin. On this basis, in determining the state of the earphone, the processor 710 obtains the detection values corresponding to the detection regions of the earphone, and in a case that any one of the first detection values is greater than or equal to the first preset value, or in a case that each of the first detection values is less than the first preset value and the M second detection values meet the first preset condition, determines that the earphone is in a non-wearing state. In this way, the state of the earphone is determined with reference to the first detection values of the first detection regions that are not in contact with the ear skin when the earphone is worn and the second detection values of the second detection regions that can be in contact with the ear skin when the earphone is worn, thereby improving the accuracy of determining the state of the earphone. Therefore, this prevents the earphone from being mistakenly triggered in a case that the earphone is in a non-wearing state, for example, a user holds the earphone or puts the earphone on a table or in a pocket, thus improving the operation reliability of the earphone and reducing energy consumption of the earphone.

Optionally, the processor 710 is further configured to: in a case that the N first detection values are less than the first preset value and at least one of the M second detection values meets a second preset condition, determine that the earphone is in a wearing state.

In the foregoing embodiment provided in this application, in determining the state of the earphone, after obtaining the N first detection values of the N first detection regions of the earphone and the M second detection values of the M second detection regions of the earphone, the processor 710 further determines, in a case that the first detection values all are less than the first preset value and at least one of the second detection values meets the second preset condition, that the earphone is in a wearing state. In this way, the state of the earphone is determined with reference to the first detection values of the first detection regions that are not in contact with the ear skin when the earphone is worn and the second detection values of the second detection regions that can be in contact with the ear skin when the earphone is worn, thereby improving the accuracy of determining the state of the earphone. Therefore, this prevents the earphone from being mistakenly triggered in a case that the earphone is in a non-wearing state, for example, a user holds the earphone or puts the earphone on a table or in a pocket, thus improving the operation reliability of the earphone and reducing energy consumption of the earphone.

Optionally, the earphone includes N first sensors, the N first sensors are respectively configured to perform detection on the N first detection regions, and the N first detection values are respectively used to indicate contact statuses between the first detection regions and the skin. In a case that a first detection sub-value among the N first detection values is greater than or equal to the first preset value, a first detection region corresponding to the first detection sub-value is in contact with the skin; or in a case that a first detection sub-value among the N first detection values is less than the first preset value, a first detection region corresponding to the first detection sub-value has a distance from the skin.

In the foregoing embodiment provided in this application, the earphone includes the N first sensors configured to perform detection on the N first detection regions respectively, and the N first detection values are used to indicate contact statuses between the first detection regions and the skin respectively. On this basis, contact statuses between the N first detection regions of the earphone and the skin can be determined according to the N first detection values detected by the N first sensors so as to determine the state of the earphone. This improves the accuracy of determining the state of the earphone, and prevents the earphone from being mistakenly triggered in a case that a user holds the earphone or puts the earphone on a table or in a pocket, thus improving the operation reliability of the earphone and reducing energy consumption of the earphone.

Optionally, the earphone includes M second sensors, the M second sensors are respectively configured to perform detection on the M second detection regions, and the M second detection values are respectively used to indicate contact statuses between the second detection regions and the skin. In a case that a second detection sub-value among the M second detection values meets a second preset condition, a second detection region corresponding to the second detection sub-value is in contact with the skin; or in a case that a second detection sub-value among the M second detection values meets the first preset condition, a second detection region corresponding to the second detection sub-value has a distance from the skin.

In the foregoing embodiment provided in this application, the earphone includes the M second sensors configured to perform detection on the M second detection regions respectively, and the M second detection values are used to indicate contact statuses between the second detection regions and the skin respectively. On this basis, contact statuses between the M second detection regions of the earphone and the skin can be determined according to the M second detection values detected by the M second sensors so as to determine the state of the earphone. This improves the accuracy of determining the state of the earphone, and prevents the earphone from being mistakenly triggered in a case that a user holds the earphone or puts the earphone on a table or in a pocket, thus improving the operation reliability of the earphone and reducing energy consumption of the earphone.

Optionally, the first sensor is a wear sensor or a proximity sensor. In a case that the first sensor is a wear sensor, the first detection value is a first capacitance value of the skin, or in a case that the first sensor is a proximity sensor, the first detection value is a first distance value between the proximity sensor and the skin.

In the foregoing embodiment provided in this application, the first sensor can be a wear sensor or a proximity sensor, and a specific representation form of the first detection value depends on the actual type of the first sensor corresponding to the first detection value. In this way, different types of first sensors can be configured to perform detection on the first detection regions to determine the state of the earphone. This ensures the accuracy of determining the state of the earphone while improving the flexibility of determining the state of the earphone and the design of the earphone.

Optionally, the second sensor is a wear sensor or a proximity sensor. In a case that the second sensor is a wear sensor, the second detection value is a second capacitance value of the skin, the first preset condition is that the second detection value is less than a second preset value, and the second preset condition is that the second detection value is greater than or equal to the second preset value, or in a case that the second sensor is a proximity sensor, the second detection value is a second distance value between the proximity sensor and the skin, the first preset condition is that the second detection value is greater than a third preset value, and the second preset condition is that the second detection value is less than or equal to the third preset value.

In the foregoing embodiment provided in this application, the second sensor can be a wear sensor or a proximity sensor, and a specific representation form of the second detection value depends on the actual type of the second sensor corresponding to the second detection value. In this way, different types of second sensors can be configured to perform detection on the second detection regions to determine the state of the earphone. This ensures the accuracy of determining the state of the earphone while further improving the flexibility of determining the state of the earphone and the design of the earphone.

It should be understood that in this embodiment of this application, the input unit 704 may include a graphics processing unit (Graphics Processing Unit, GPU) 7041 and a microphone 7042. The graphics processing unit 7041 processes image data of a static picture or a video that is obtained by an image capture apparatus (for example, a camera) in a video capture mode or an image capture mode. The display unit 706 may include a display panel 7061, and the display panel 7061 may be configured in a form of a liquid crystal display, an organic light-emitting diode, or the like. The user input unit 707 includes at least one of a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a functional button (such as a volume control button or a power on/off button), a trackball, a mouse, and a joystick. Details are not described herein again.

The memory 709 may be configured to store software programs and various data. The memory 709 may include a first storage area for storing programs or instruction and a second storage area for storing data. The first storage area may store an operating system, an application program or instruction required by at least one function (for example, a sound play function or an image play function), and the like. Additionally, the memory 709 may be a volatile memory or a non-volatile memory, or the memory 709 may include both a volatile memory and a non-volatile memory.

The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 709 in the embodiments of this application includes but is not be limited to these or any other applicable types of memories.

The processor 710 may include one or more processing units. Optionally, the processor 710 may integrate an application processor and a modem processor. The application processor primarily processes operations involving an operating system, user interface, application program, or the like. The modem processor primarily processes radio communication signals, for example, being a baseband processor. It can be understood that the modem processor may alternatively be not integrated in the processor 710.

An embodiment of this application further provides a readable storage medium. The readable storage medium stores a program or instruction, and when the program or instruction is executed by a processor, the processes of the foregoing embodiment of the state determining method according to the first aspect are implemented, with the same technical effects achieved. To avoid repetition, details are not described herein again.

The processor is the processor in the electronic device in the foregoing embodiments. The readable storage medium includes a computer-readable storage medium such as a computer read-only memory ROM, a random access memory RAM, a magnetic disk, or an optical disc.

An embodiment of this application still further provides a chip. The chip includes a processor and a communication interface, where the communication interface is coupled to the processor, and the processor is configured to run a program or instruction, so that the processes in the foregoing embodiments of the state determining method according to the first aspect are implemented, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application provides a computer program product. The program product is stored in a storage medium. The program product is executed by at least one processor to implement the processes of the foregoing embodiment of the state determining method according to the first aspect, with the same technical effects achieved. To avoid repetition, details are not described herein again.

It should be noted that the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more constraints, an element preceded by "includes a..." does not preclude the presence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

Based on the above description of embodiments, persons skilled in the art can clearly understand that the method in the foregoing embodiments can be implemented through software on a necessary hardware platform or certainly through hardware, but in many cases, the former is the more preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other forms without departing from the principle of this application and the protection scope of the claims, and all such forms fall within the protection scope of this application.

## Claims

1. A state determining method, applied to an earphone, wherein the earphone comprises N first detection regions and M second detection regions, and the state determining method comprises:
obtaining N first detection values corresponding to the N first detection regions and M second detection values corresponding to the M second detection regions;
in a case that at least one of the N first detection values is greater than or equal to a first preset value, determining that the earphone is in a non-wearing state; and
in a case that the N first detection values are less than the first preset value and the M second detection values meet a first preset condition, determining that the earphone is in a non-wearing state; wherein
in a wearing state of the earphone, the N first detection regions have a distance from the skin, and the M second detection regions are in contact with the skin.

2. The state determining method according to claim 1, wherein after the obtaining N first detection values corresponding to the N first detection regions and M second detection values corresponding to the M second detection regions, the method further comprises:
in a case that the N first detection values are less than the first preset value and at least one of the M second detection values meets a second preset condition, determining that the earphone is in a wearing state.

3. The state determining method according to claim 1, wherein the earphone comprises N first sensors, the N first sensors are respectively configured to perform detection on the N first detection regions, and the N first detection values are respectively used to indicate contact statuses between the first detection regions and the skin; wherein
in a case that a first detection sub-value among the N first detection values is greater than or equal to the first preset value, a first detection region corresponding to the first detection sub-value is in contact with the skin; or
in a case that a first detection sub-value among the N first detection values is less than the first preset value, a first detection region corresponding to the first detection sub-value has a distance from the skin.

4. The state determining method according to claim 1, wherein the earphone comprises M second sensors, the M second sensors are respectively configured to perform detection on the M second detection regions, and the M second detection values are respectively used to indicate contact statuses between the second detection regions and the skin; wherein
in a case that a second detection sub-value among the M second detection values meets a second preset condition, a second detection region corresponding to the second detection sub-value is in contact with the skin; or
in a case that a second detection sub-value among the M second detection values meets the first preset condition, a second detection region corresponding to the second detection sub-value has a distance from the skin.

5. The state determining method according to claim 3, wherein the first sensor is a wear sensor or a proximity sensor; and
in a case that the first sensor is a wear sensor, the first detection value is a first capacitance value of the skin, or
in a case that the first sensor is a proximity sensor, the first detection value is a first distance value between the proximity sensor and the skin.

6. The state determining method according to claim 4, wherein the second sensor is a wear sensor or a proximity sensor; and
in a case that the second sensor is a wear sensor, the second detection value is a second capacitance value of the skin, the first preset condition is that the second detection value is less than a second preset value, and the second preset condition is that the second detection value is greater than or equal to the second preset value, or
in a case that the second sensor is a proximity sensor, the second detection value is a second distance value between the proximity sensor and the skin, the first preset condition is that the second detection value is greater than a third preset value, and the second preset condition is that the second detection value is less than or equal to the third preset value.

7. A state determining apparatus, applied to an earphone, wherein the earphone comprises N first detection regions and M second detection regions, and the state determining apparatus comprises:
an obtaining unit configured to obtain N first detection values corresponding to the N first detection regions and M second detection values corresponding to the M second detection regions; and
a processing unit configured to: in a case that at least one of the N first detection values is greater than or equal to a first preset value, determine that the earphone is in a non-wearing state; wherein
the processing unit is further configured to: in a case that the N first detection values are less than the first preset value and the M second detection values meet a first preset condition, determine that the earphone is in a non-wearing state; wherein
in a wearing state of the earphone, the N first detection regions have a distance from the skin, and the M second detection regions are in contact with the skin.

8. The state determining apparatus according to claim 7, wherein the processing unit is further configured to:
in a case that the N first detection values are less than the first preset value and at least one of the M second detection values meets a second preset condition, determine that the earphone is in a wearing state.

9. The state determining apparatus according to claim 7, wherein the earphone comprises N first sensors, the N first sensors are respectively configured to perform detection on the N first detection regions, and the N first detection values are respectively used to indicate contact statuses between the first detection regions and the skin; wherein
in a case that a first detection sub-value among the N first detection values is greater than or equal to the first preset value, a first detection region corresponding to the first detection sub-value is in contact with the skin; or
in a case that a first detection sub-value among the N first detection values is less than the first preset value, a first detection region corresponding to the first detection sub-value has a distance from the skin.

10. The state determining apparatus according to claim 7, wherein the earphone comprises M second sensors, the M second sensors are respectively configured to perform detection on the M second detection regions, and the M second detection values are respectively used to indicate contact statuses between the second detection regions and the skin; wherein
in a case that a second detection sub-value among the M second detection values meets a second preset condition, a second detection region corresponding to the second detection sub-value is in contact with the skin; or
in a case that a second detection sub-value among the M second detection values meets the first preset condition, a second detection region corresponding to the second detection sub-value has a distance from the skin.

11. The state determining apparatus according to claim 9, wherein the first sensor is a wear sensor or a proximity sensor; and
in a case that the first sensor is a wear sensor, the first detection value is a first capacitance value of the skin, or
in a case that the first sensor is a proximity sensor, the first detection value is a first distance value between the proximity sensor and the skin.

12. The state determining apparatus according to claim 10, wherein the second sensor is a wear sensor or a proximity sensor; and
in a case that the second sensor is a wear sensor, the second detection value is a second capacitance value of the skin, the first preset condition is that the second detection value is less than a second preset value, and the second preset condition is that the second detection value is greater than or equal to the second preset value, or
in a case that the second sensor is a proximity sensor, the second detection value is a second distance value between the proximity sensor and the skin, the first preset condition is that the second detection value is greater than a third preset value, and the second preset condition is that the second detection value is less than or equal to the third preset value.

13. An electronic device, comprising a processor and a memory, wherein the memory stores a program or instruction capable of running on the processor, and when the program or instruction is executed by the processor, the steps of the state determining method according to any one of claims 1 to 6 are implemented.

14. A readable storage medium, wherein the readable storage medium stores a program or instruction, and when the program or the instruction is executed by a processor, the steps of the state determining method according to any one of claims 1 to 6 are implemented.

15. A chip, wherein the chip comprises a processor and a communication interface, the communication interface is coupled to the processor, and the processor is configured to run a program or instruction so as to implement the method according to any one of claims 1 to 6.

16. A computer program product, wherein the program product is stored in a non-transient storage medium, and the program product is executed by at least one processor so as to implement the method according to any one of claims 1 to 6.

17. An electronic device, wherein the electronic device is configured to perform the method according to any one of claims 1 to 6.
